# EUROPÄISCHE PATENTSCHRIFT

(11) **EP 2 463 181 B1**
(45) Veröffentlichungstag und Bekanntmachung des Hinweises auf die Patenterteilung: **18.07.2018**
(21) Anmeldenummer: 11189721.1
(22) Anmeldetag: 18.11.2011
(51) Int. Cl.: B62D 65/02, B62D 65/04

(54) **Kraftfahrzeug und Verfahren zur Herstellung eines Kraftfahrzeugs**
Assembly process of a motor vehicle and corresponding motor vehicle
Véhicule automobile et procédé de fabrication dudit véhicule automobile

(30) Priorität: 07.12.2010 DE 102010053666
(43) Veröffentlichungstag der Anmeldung: 13.06.2012
(73) Patentinhaber: Magna Steyr Fahrzeugtechnik AG & Co KG, 8041 Graz (AT)
(72) Erfinder: Hofer, Bernhard, 8053 Graz (AT); Bernhard, Sabine, 8401 Kalsdorf (AT)
(74) Vertreter: Zangger, Bernd

(56) Entgegenhaltungen:
- EP-A1- 0 512 576
- DE-A1- 4 438 214
- DE-A1- 19 606 779
- GB-A- 2 187 683

## Beschreibung

Die vorliegende Erfindung betrifft ein Verfahren zur Herstellung eines Kraftfahrzeugs.

Kraftfahrzeuge und Verfahren zu deren Herstellung sind allgemein bekannt.

Aus der GB 2 187 683 A ist ein modularer Aufbau eines Fahrzeuges bekannt, der eine Anzahl von Modulen umfasst, welche individuell hergestellt und zusammengebaut werden können, bevor die Module final zu einem Fahrzeug zusammen gebaut werden.

Die DE 44 38 214 A1 lehrt ein Verfahren zur Herstellung eines Kraftfahrzeugs, wobei die Rohkarosse in zwei Hauptkarossen (Vorderbau, Hinterbau) vormontiert wird, wobei die Hauptkarossen voneinander unabhängig mit den ihnen zugeordneten Bauelementen bestückt werden, wobei nachdem die Hauptkarossen zumindest weitestgehend komplettiert wurden, sie zusammengeführt und starr miteinander verbunden werden.

Die gattungsgemäße DE 196 06 779 A1 offenbart ein Verfahren zur Montage und Farbgebung eines Kraftfahrzeuges mit selbsttragender Karosserie, wobei das gesamte Kraftfahrzeug einschließlich der Karosserie aus einzelnen Modulen zusammengesetzt wird, die unabhängig voneinander so vorgefertigt werden, dass sie mit allen Ausstattungsmerkmalen voll funktionsfähig und den Erfordernissen entsprechend lackiert für eine Endmontage zur Verfügung stehen und wobei die Module in einer nach annähernd beliebigen spezifischen Kriterien optimierten Montagereihenfolge endmontiert werden.

Der vorliegenden Erfindung liegt die Aufgabe zu Grunde, ein flexibel einsetzbares Verfahren zur Herstellung eines Kraftfahrzeugs, durch das sich auch die Herstellungskosten senken lassen, anzugeben.

Die Aufgabe wird durch ein Verfahren gemäß Anspruch 1 gelöst.

Das erfindungsgemäße Verfahren zur Herstellung eines Kraftfahrzeugs umfasst die Schritte:
- Lackieren, insbesondere kathodisches Tauchlackieren, eines Fahrzeuggrundrahmens;
- Erzeugen eines Fahrgestells durch Anbringen eines Antriebsstrangs, eines Fahrwerks und einer Fahrzeugelektrikeinrichtung an dem lackierten Fahrzeuggrundrahmen;
- Anbringen von Ausstattungskomponenten, insbesondere für den Fahrzeuginnenraum, an dem Fahrgestell, um ein ausgestattetes Fahrgestell zu bilden;
- Lackieren, insbesondere Decklackieren, von bereitgestellten Aufbaurohbaumodulen;
- Erzeugen eines jeweiligen Aufbaumodulzusammenbaus aus jedem Aufbaurohbaumodul durch Anbringen einer zum jeweiligen Aufbaurohbaumodul gehörenden Modulelektrikeinrichtung und/oder zumindest einer Modulausstattungskomponente; und
- Anbringen, insbesondere Ankleben und/oder Anschrauben, der Aufbaumodulzusammenbauten an dem ausgestatteten Fahrgestell, wobei die Unterseite des Fahrzeuggrundrahmens (102) bei der Montage des Antriebsstrangs (109) und des Fahrwerks (117, 119) nach oben weist, und das Fahrgestell (131) vor dem Anbringen der Ausstattungskomponenten (103 - 105, 125) gewendet wird, so dass die Unterseite des Fahrzeuggrundrahmens nach unten weist.

Bei dem erfindungsgemäßen Verfahren werden demnach die Aufbaumodulzusammenbauten und das ausgestattete Fahrgestell getrennt voneinander erzeugt und zur Bildung des Fahrzeugs zusammengeführt, indem die Aufbaumodulzusammenbauten am ausgestatteten Fahrgestell angebracht werden. Dies erlaubt es, die Aufbaumodulzusammenbauten und das ausgestattete Fahrgestell in separaten Fertigungslinien zu erzeugen, die dadurch kurz gehalten werden können und somit eine geringere Komplexität aufweisen. Auch die einzelnen Aufbaumodulzusammenbauten können in unterschiedlichen Fertigungslinien oder auch, zumindest was einzelne Arbeitsschritte betrifft, bspw. das Lackieren, in einer Fertigungslinie hergestellt werden, so dass die Fertigungslinien für die Aufbaumodulzusammenbauten jeweils auch entsprechend kurz gehalten werden können. Dabei kann ein Aufbaurohbaumodul aus einem oder mehreren, insbesondere miteinander verbundenen, Aufbaurohbauteilen ausgebildet sein, wie etwa der Modulelektrikeinrichtung und der Modulausstattungskomponenten.

Das Fahrgestell mit dem Fahrzeugrahmen und dem daran angeordneten Antriebsstrang, dem Fahrwerk und der Fahrzeugelektrikeinrichtung kann auch als "Rolling Chassis" bezeichnet werden, da das Fahrgestell aufgrund der am Fahrwerk angebrachten Räder bewegbar ist.

Ein Vorteil des erfindungsgemäßen Verfahrens ist, dass die Aufbaumodulzusammenbauten zeitlich parallel zueinander und auch zeitlich parallel zum ausgestatteten Fahrgestell hergestellt werden können. Dadurch kann die Gesamtzeit verkürzt werden, die zur Herstellung des Kraftfahrzeugs benötigt wird. Das Anbringen der Aufbaumodulzusammenbauten an dem ausgestatteten Fahrgestell kann durch Kaltfügen erfolgen, beispielsweise durch Ankleben und/oder Anschrauben.

Durch Tauchlackieren des Grundrahmens einerseits und Decklackieren der Aufbaurohbaumodule andererseits lassen sich die jeweiligen Lackiervorgänge unter Kostenaspekten optimieren, ohne dass Einbußen in der Qualität der Lackierungen in Kauf genommen werden müssen.

Die vorstehend erwähnte Fahrzeugelektrikeinrichtung umfasst elektrische und/oder elektronische Komponenten der Fahrzeugelektrik bzw. der Fahrzeugelektronik, die am Fahrgestell angeordnet werden. Derartige Komponenten sind bspw. Kabelbäume, die im Bereich des Fahrgestells verlaufen.

Die Ausstattungskomponenten, insbesondere für den Fahrzeuginnenraum, können jedwede Komponenten umfassen, die sich besonders einfach durch Anbringung am Fahrgestell in das Fahrzeug integrieren lassen. Die Ausstattungskomponenten können insbesondere ein Cockpit bzw. eine Armatur, Fahrzeugsitze, Teppiche für den Innenraum und eine Lenkung umfassen.

Die Modulelektrikeinrichtung eines Aufbaumodulzusammenbaus kann die elektrischen und/oder elektronischen Komponenten umfassen, die zum jeweiligen Aufbaumodulzusammenbau gehören bzw. vorgesehen sind, in den jeweiligen Aufbaumodulzusammenbau integriert zu werden. Bspw. kann eine Modulelektrikeinrichtung eines nachstehend näher beschriebenen Türmodulzusammenbaus einen elektrischen Fensterheber und eine Türbeleuchtung umfassen.

Die Modulausstattungskomponente kann andere Komponenten eines Aufbaumodulzusammenbaus umfassen, wie etwa Verkleidungen.

Erfindungsgemäß weist die Unterseite des Fahrzeuggrundrahmens bei der Montage des Antriebsstrangs und des Fahrwerks nach oben. Dadurch können die genannten Komponenten einfacher und schneller am Fahrzeuggrundrahmen angeordnet werden. Außerdem wird das Fahrgestell vor dem Anbringen der Ausstattungskomponenten gewendet, so dass die Unterseite des Fahrzeuggrundrahmens nach unten weist. Dadurch lassen sich die Ausstattungskomponenten ebenfalls einfacher montieren.

Weiterbildungen und bevorzugte Ausführungsformen der Erfindung sind in den abhängigen Ansprüchen angegeben.

Bevorzugt ist der Fahrzeuggrundrahmen variabel ausgestaltet, insbesondere für unterschiedliche Radstände und /oder Radgrößen und/oder Überhänge und/oder Fahrzeugbreiten ausgelegt und/oder weist eine variable Längsträgerspur auf, und der Fahrzeuggrundrahmen wird auf den anzubringenden Antriebsstrang und/oder das anzubringende Fahrwerk eingestellt. Dadurch lässt sich der Fahrzeuggrundrahmen auf das jeweilige herzustellende Fahrzeugmodell bzw. den herzustellenden Fahrzeugtyp einstellen.

Nach einer bevorzugten Ausgestaltung der Erfindung weist die Unterseite des Fahrzeuggrundrahmens bei der Montage der Fahrzeugelektrikeinrichtung nach oben.

Es kann auch vorgesehen sein, den Fahrzeuggrundrahmen während der Montage des Antriebsstrangs und/oder des Fahrwerks und/oder der Fahrzeugelektrikeinrichtung mehrmals zu wenden, um gegebenenfalls Elemente des Antriebsstrangs, des Fahrwerks und/oder der Fahrzeugelektrikeinrichtung je nach besserem Zugang von der Oberseite oder von der Unterseite des Fahrzeuggrundrahmens her zu montieren.

Vorzugsweise werden die Aufbaurohbaumodule parallel zum Fahrzeuggrundrahmen gefertigt und/oder in einem gemeinsamen Lackiervorgang lackiert. Dadurch lässt sich der Herstellungsprozess, insbesondere hinsichtlich der Gesamtzeit, die für die Herstellung des Kraftfahrzeugs benötigt wird, und hinsichtlich der anfallenden Kosten, weiter optimieren. Auch die Zugänglichkeit bei der Montage der einzelnen Module ist verbessert gegenüber einer konventionellen Fahrzeugarchitektur. Beispielsweise lässt sich ein Gurt einfacher in ein Seitenwandrohbaumodul einfädeln.

Bevorzugt umfassen die Aufbaurohbaumodule einen linken Seitenwandrohbau, einen rechten Seitenwandrohbau, einen Dachrohbau, einen Heckabschlussrohbau, einen Rohbau einer linken vorderen Tür, einen Rohbau einer rechten vorderen Tür, optional einen Rohbau einer linken hinteren Tür, optional einen Rohbau einer rechten hinteren Tür, und einen Heckklappenrohbau. Die genannten Bauteile lassen sich relativ einfach herstellen, optional auch an unterschiedlichen Standorten, und weiterverarbeiten.

Nach einer Weiterbildung der Erfindung umfassen die Aufbaumodulzusammenbauten einen linken und rechten Seitenwandmodulzusammenbau, einen Dachmodulzusammenbau, einen Heckabschlussmodulzusammenbau, zumindest einen Türmodulzusammenbau und einen Heckklappenmodulzusammenbau.

Wesentliche Komponenten des Kraftfahrzeugs, die nicht bereits am Fahrgestell angebracht werden, werden somit als Aufbaumodulzusammenbauten realisiert, die dann am ausgestatteten Fahrgestell angebracht werden. Jeder einzelne Aufbaumodulzusammenbau weist, wie vorstehend bereits erwähnt wurde, die dazugehörende Modulelektrikeinrichtung und/oder die dazugehörende Modulausstattungskomponente auf. Daher kann jeder Aufbaumodulzusammenbau die jeweiligen Komponenten bzw. Bauteile aufweisen, die zur Bereitstellung der jeweiligen, dem entsprechenden Aufbaumodulzusammenbau zugeschriebenen Funktionalität benötigt wird. Die Aufbaumodulzusammenbauten müssen demnach nicht mehr oder nur in einem geringen Maß mit weiteren Komponenten bzw. Bauteilen ergänzt werden, nachdem diese am ausgestatteten Fahrwerk angeordnet worden sind, was zu einer Vereinfachung des Herstellungsverfahrens und zu einer Verkürzung der Gesamtherstellungszeit führt.

Besonders bevorzugt umfasst der linke bzw. rechte Seitenwandmodulzusammenbau den Rohbau der linken bzw. rechten Seitenwand sowie daran angebrachte Säulenverkleidungen und/oder daran angebrachte Seitenwandelektrikkomponenten, der Dachmodulzusammenbau den Dachrohbau mit einem daran angebrachten Dachhimmel und/oder daran angebrachten Innenbeleuchtungselementen, der Heckabschlussmodulzusammenbau den Heckabschlussrohbau mit daran angeordneter Heckblende und/oder daran angeordneter Ladekante und/oder daran angeordneter Verkleidung, jeder Türmodulzusammenbau jeweils einen Türrohbau mit daran angeordneter Verkleidung und/oder daran angeordneten Türelektrikeinrichtungen, und der Heckklappenmodulzusammenbau den Heckklappenrohbau mit daran angeordneter Verkleidung und/oder daran angeordneten Heckklappenelektrikeinrichtungen.

Demnach umfasst bspw. der Dachmodulzusammenbau als Modulelektrikeinrichtung die Innenbeleuchtungselemente und als Modulausstattungskomponente den Dachhimmel, die an dem Aufbaurohbaumodul Dachrohbau angebracht werden. Nach einem anderen Beispiel umfasst jeder Türmodulzusammenbau jeweils ein Aufbaurohbaumodul in Form eines Türrohbaus mit einer daran angeordneten Modulausstattungskomponente in Form einer Verkleidung und/oder mit einer daran angeordneten Modulelektrikeinrichtung in Form einer Türelektrikeinrichtung. Die einzelnen Aufbaumodulzusammenbauten können demnach - wie vorstehend erwähnt - funktionale Einheiten bilden, durch die sich die Herstellung des Kraftfahrzeugs vereinfachen und die dafür benötigte Zeit verkürzen lässt.

Nach einer weiteren bevorzugten Ausgestaltung des Verfahrens werden der linke und der rechte Seitenwandmodulzusammenbau, der Dachmodulzusammenbau, der Heckabschlussmodulzusammenbau, der Heckklappenmodulzusammenbau und die Türmodulzusammenbauten durch Kleben und/oder Verschrauben an dem ausgestatteten Fahrgestell befestigt. Durch den Einsatz von Klebstoff lassen sich die Akustikeigenschaften des Innenraums des Kraftfahrzeugs verbessern, da Klebstoff schalldämpfend wirkt. Außerdem kann gegenüber dem Einsatz von Schrauben eine Gewichtsreduktion erreicht werden.

Dabei werden besonders bevorzugt Blenden, insbesondere zur Abdeckung von Schraub- und/oder Klebestellen, zwischen benachbarten Aufbaumodulzusammenbauten angeordnet, zum Beispiel um den optischen Eindruck der Karosserie zu verbessern.

Es können Scheiben und/oder ein Frontmodul und /oder Stoßfängerüberzüge und/oder Kotflügel nach dem Anbringen der Aufbaumodulzusammenbauten am ausgestatteten Fahrgestell eingebaut werden. Das Kraftfahrzeug wird somit nach dem Anbringen der Aufbaumodulzusammenbauten vervollständigt.

Es kann auch vorgesehen sein, dass die Fahrzeugelektrikeinrichtung zumindest eine Koppelstelle für jede Modulelektrikeinrichtung aufweist, über die die jeweilige Modulelektrikeinrichtung mit der Fahrzeugelektrikeinrichtung elektrisch verbunden wird, insbesondere nach dem Anbringen der Aufbaumodulzusammenbauten am ausgestatteten Fahrgestell. Dadurch lassen sich die Modulelektrikeinrichtungen der Aufbaumodulzusammenbauten schnell und auf einfache Weise mit der Fahrzeugelektrikeinrichtung elektrisch verbinden.

Bevorzugt werden die Aufbaumodulzusammenbauten derart an dem ausgestatteten Fahrgestell angebracht und miteinander verbunden, dass die Steifigkeit des Fahrgestells erhöht wird. Da somit die Aufbaumodulzusammenbauten eine Erhöhung der Steifigkeit bewirken, kann der Fahrzeuggrundrahmen mit einer geringeren Steifigkeit ausgebildet werden, was in einer Gewichtsersparnis resultiert im Vergleich zur Rahmenbauweise.

Die Erfindung betrifft auch ein Kraftfahrzeug, welches insbesondere gemäß dem erfindungsgemäßen Verfahren hergestellt ist, und welches umfasst:
- ein Fahrgestell mit einem lackierten Fahrzeuggrundrahmen, an welchem ein Antriebsstrang, ein Fahrwerk und eine Fahrzeugelektrikeinrichtung angeordnet sind;
- Ausstattungskomponenten, insbesondere für den Fahrzeuginnenraum, welche an dem Fahrgestell angeordnet sind und mit dem Fahrgestell ein ausgestattetes Fahrgestell bilden; und
- mehrere Aufbaumodulzusammenbauten mit jeweils einem lackierten Aufbaurohbaumodul, an welchem eine zum jeweiligen Aufbaurohbaumodul gehörende Modulelektrikeinrichtung und/oder eine zum jeweiligen Aufbaurohbaumodul gehörende Modulausstattungskomponente angeordnet ist; wobei jeder Aufbaumodulzusammenbau am ausgestatteten Fahrgestell angebracht, insbesondere angeklebt und/oder angeschraubt, ist.

An dem erfindungsgemäßen Kraftfahrzeug ist vorteilhaft, dass dieses, insbesondere bedingt durch den Herstellungsprozess, eine selbst tragende Karosserie aufweist, welche nicht vom Fahrzeuggrundrahmen entkoppelt ist. Gummilager zwischen dem Fahrzeuggrundrahmen und den daran angeordneten Komponenten werden somit nicht oder in einem geringeren Maße benötigt, mit dem entsprechenden Gewinn an zusätzlichem Bauraum.

Jedes Aufbaurohbaumodul kann aus mehreren unterschiedlichen Materialien bestehen. Außerdem können verschiedene Typen von Aufbaurohbaumodulen aus unterschiedlichen Materialien bestehen. Insbesondere bestehen die Aufbaurohbaumodule und/oder der Fahrzeuggrundrahmen aus dem, bspw. im Hinblick ihrer jeweiligen Funktionalität, jeweils optimalen Material bzw. Materialmix, bspw. aus Stahl, Aluminium, Kunststoff und/oder einem Verbundmaterial.

Auch die einzelnen Aufbaumodulzusammenbauten können mehrere Materialien aufweisen, da insbesondere das jeweilige Aufbaurohbaumodul, die jeweilige Modulelektrikeinrichtung und/oder die jeweilige Modulausstattungskomponente aus unterschiedlichen Materialen bestehen können. Die an einem Kraftfahrzeug angeordneten Aufbaumodulzusammenbauten können sich daher hinsichtlich der Materialen, aus denen diese jeweils bestehen, unterscheiden. Insofern besteht das Gesamtfahrzeug aus einem "Materialmix", welcher bei entsprechender Wahl der Materialen bspw. im Hinblick auf das Fahrzeuggewicht optimiert werden kann, ohne dass zum Beispiel wesentliche Beeinträchtigungen der Stabilität in Kauf genommen werden müssen.

Die Erfindung wird nachfolgend beispielhaft unter Bezugnahme auf die beiliegenden Zeichnungen beschrieben. Es zeigen, jeweils in schematischer Darstellung,
- Fig. 1: ein Flussdiagramm einer Variante des erfindungsgemäßen Verfahrens,
- Fig. 2: eine Illustration, wie ein ausgestattetes Fahrgestell gebildet werden kann,
- Fig. 3: eine Illustration, wie anhand des ausgestatteten Fahrgestells von Fig. 2 ein Kraftfahrzeug gebildet werden kann, und
- Fig. 4: eine Illustration, wie ein Dachmodulzusammenbau erzeugt werden kann.

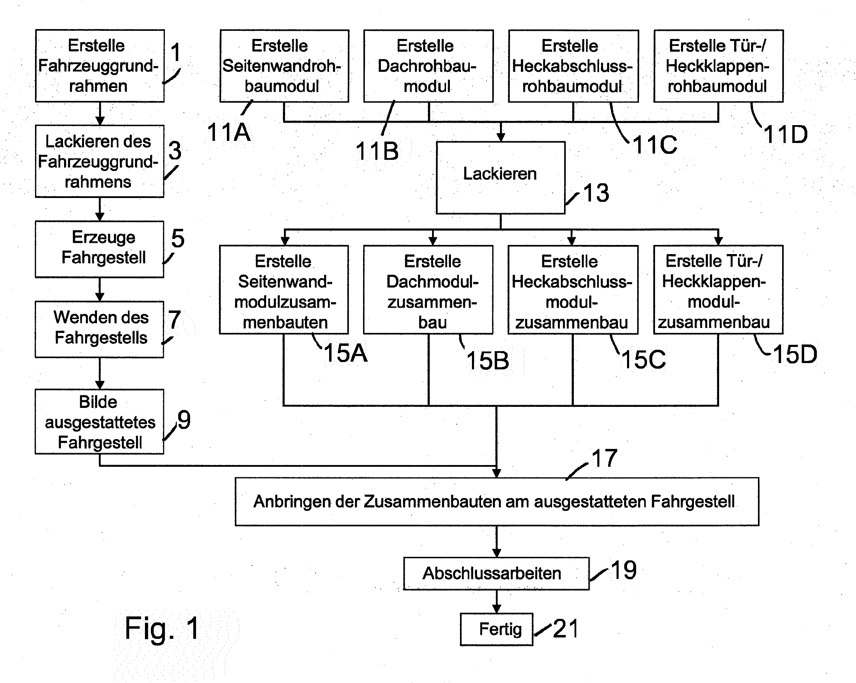

Gemäß der Variante nach Fig. 1 zur Herstellung eines Kraftfahrzeugs erfolgt in Schritt 1 die Erstellung eines Fahrzeuggrundrahmens. Der Fahrzeuggrundrahmen bildet die Basis für das herzustellende Kraftfahrzeug und ist variabel ausgestaltet. Dieser kann daher entsprechend dem Fahrzeugtyp oder Fahrzeugmodell an den vorgesehenen Radstand, an die Radgrößen, an Überhänge und an die vorgesehene Fahrzeugbreite angepasst werden. Der Fahrzeuggrundrahmen weist auch eine variable Längsträgerstruktur auf. Daher kann dieser an den anzubringenden Antrieb angepasst werden. Es kann also beispielsweise ein Allradantrieb ebenso wie ein Vorderrad- oder ein Hinterradantrieb in den Fahrzeuggrundrahmen eingebaut werden. Außerdem kann die Motoranordnung eines Verbrennungskraftmotors längs oder quer erfolgen. Ebenso kann ein Hybrid- oder Elektroantrieb vorgesehen sein.

In Schritt 3 wird die Oberfläche des Fahrzeuggrundrahmens durch kathodisches Tauchlackieren beschichtet. In Schritt 5 wird ein Fahrgestell erzeugt, indem ein Antriebsstrang, ein Fahrwerk und eine Fahrzeugelektrikeinrichtung an dem lackierten Fahrzeuggrundrahmen angebracht werden. Dabei ist der flexible Fahrzeuggrundrahmen so eingestellt, dass sich der Antriebsstrang und das Fahrwerk einbauen lassen. Die Unterseite des Fahrzeuggrundrahmens weist bei der Montage des Antriebsstrangs und/oder des Fahrwerks und/oder der Fahrzeugelektrikeinrichtung nach oben, um den jeweiligen Montagevorgang zu vereinfachen. Dabei kann der Antriebsstrang insbesondere auch einen Motor, ein Getriebe, ein Kraftstoffzuleitungssystem einschließlich eines Tanks und ein Abgassystem umfassen und das Fahrwerk kann insbesondere auch eine Vorder- und eine Hinterachse einschließlich der Stoßdämpfer und der Räder beinhalten. Die Fahrzeugelektrikeinrichtung umfasst insbesondere Kabelbäume bzw. Kabelstränge oder auch Steuergeräte oder Sensoren, die sich auf dieser Stufe des Herstellungsprozesses besonders einfach einbauen lassen.

In Schritt 7 wird das Fahrgestell gewendet. Dieser Schritt kann auch als Zwischenschritt innerhalb des Schrittes 5 erfolgen, beispielsweise falls sich der Antriebsstrang, das Fahrwerk, die Fahrzeugelektrikeinrichtung oder einzelne Komponenten davon besser am Fahrzeuggrundrahmen anbringen lassen, wenn dessen Oberseite nach oben weist. Insbesondere kann es auch vorgesehen sein, dass das Fahrgestell mehrfach zwischen verschiedenen Ausrichtungen hin und her gewendet wird, um die vorstehend genannten Einrichtungen in das Fahrgestell einzubauen.

In Schritt 9 wird ein ausgestattetes Fahrgestell dadurch gebildet, dass Ausstattungskomponenten, insbesondere für den Innenraum, wie etwa eine Armatur einschließlich eines Cockpits, Fahrzeugsitze und Teppiche, an dem Fahrgestell angeordnet werden. Außerdem kann eine Lenkung eingebaut werden, soweit Teile der Lenkung nicht bereits zusammen mit dem Fahrwerk in Schritt 5 eingebaut worden sind.

Wie aus Fig. 1 ersichtlich ist, werden in den Schritten 11A bis 11D, die parallel zu den Schritten 1 bis 9 ausgeführt werden, Aufbaurohbaumodule erstellt. Dabei wird in Schritt 11A jeweils ein linkes Seitenwandrohbaumodul und ein rechtes Seitenwandrohbaumodul erstellt. In Schritt 11B wird ein Dachrohbaumodul, in Schritt 11C wird ein Heckabschlussrohbaumodul und in Schritt 11D werden ein Rohbaumodul einer linken vorderen Tür, ein Rohbaumodul einer rechten vorderen Tür, optional ein Rohbaumodul einer linken hinteren Tür, optional ein Rohbaumodul einer rechten hinteren Tür und ein Heckklappenrohbaumodul erstellt. Die einzelnen Schritte 11A bis 11D können insbesondere auch an verschiedenen Orten bzw. unter Einsatz unterschiedlicher Fertigungslinien durchgeführt werden, sind also unabhängig voneinander.

In Schritt 13 werden die Aufbaurohbaumodule, insbesondere zum Zwecke der Kostenersparnis, gemeinsam decklackiert.

In den Schritten 15A bis 15D wird jeweils ein Aufbaumodulzusammenbau aus jedem Aufbaurohbaumodul erzeugt. Dabei wird in Schritt 15A aus dem linken bzw. rechten Seitenwandrohbaumodul durch Anbringen von Vorverkabelungen und Säulenverkleidungen ein linker bzw. rechter Seitenwandmodulzusammenbau gebildet. In Schritt 15B wird aus dem Dachrohbaumodul durch Anbringen eines Dachhimmels und von Innenbeleuchtungselementen ein Dachmodulzusammenbau gebildet. In Schritt 15C wird ein Heckabschlussmodulzusammenbau aus dem Heckabschlussrohbaumodul durch Anbringen einer Heckblende, einer Ladekante und von Verkleidungen gebildet. In Schritt 15D wird jeweils ein Türmodulzusammenbau aus einem der Türrohbaumodule durch Anbringen einer Innenverkleidung und von Türelektrikeinrichtungen, beispielsweise für einen Fensterheber und eine Türverriegelung, gebildet. Außerdem wird ein Heckklappenmodulzusammenbau aus dem Heckklappenrohbaumodul durch Anordnung einer Verkleidung und von Heckklappenelektrikeinrichtungen, beispielsweise für eine Heckklappenverriegelung und eine Heckklappeninnenbeleuchtung, gebildet.

Wie aus Fig. 1 ersichtlich ist, werden die Schritte 15A bis 15D parallel ausgeführt, wodurch eine Verkürzung der Gesamtzeit erreicht wird, die zum Herstellen des Kraftfahrzeugs benötigt wird.

Wie ferner aus Fig. 1 ersichtlich ist, werden die in den Schritten 15A bis 15D gebildeten Aufbaumodulzusammenbauten in Schritt 17 mit dem ausgestatteten Fahrgestell zusammengeführt, indem die Aufbaumodulzusammenbauten an dem ausgestatteten Fahrgestell angebracht werden. Dabei werden die Aufbaumodulzusammenbauten an den entsprechenden Stellen am Fahrgestell angeklebt und/oder angeschraubt, insbesondere derart, dass die Steifigkeit des Fahrgestells erhöht wird.

In Schritt 19 werden Blenden zur Abdeckung von Schraub- bzw. Klebestellen zwischen benachbarten Aufbaumodulzusammenbauten angeordnet. Außerdem werden Scheiben und ein Frontmodul, Kotflügel, Stoßfängerüberzüge sowie sonstige Elektrikeinrichtungen eingebaut.

Die in Schritt 5 eingebaute Fahrzeugelektrikeinrichtung weist zumindest eine Koppelstelle für jede Modulelektrikeinrichtung auf. Über die jeweilige Koppelstelle wird die jeweilige Modulelektrikeinrichtung in Schritt 19 mit der Fahrzeugelektrikeinrichtung elektrisch verbunden. In Schritt 21 ist das Fahrzeug fertig gestellt.

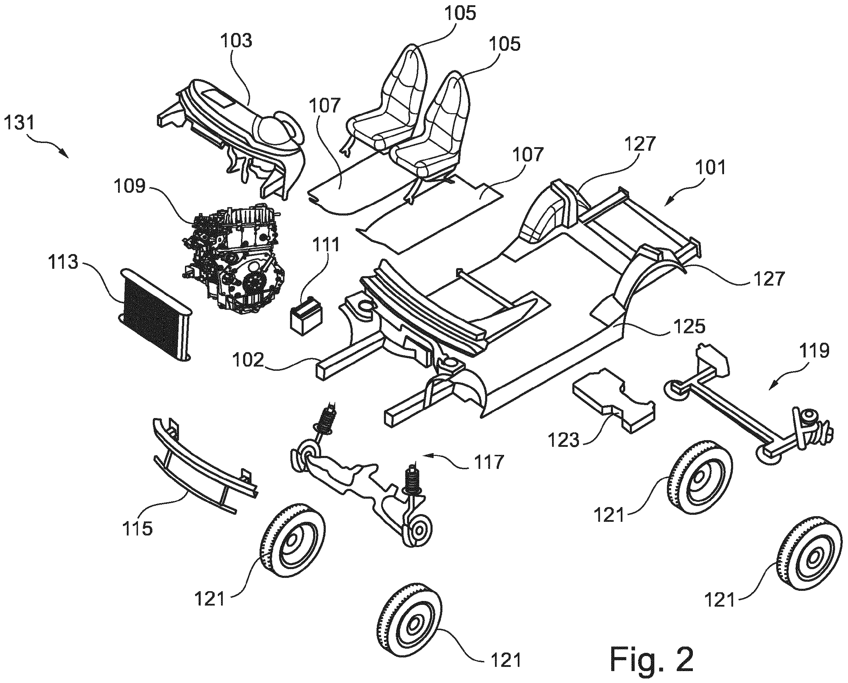

Gemäß Fig. 2 werden zur Erzeugung eines Fahrgestells 101 ein Antriebsstrang, umfassend einen Antrieb 109, einen Tank 123 und Elemente einer Abgasanlage, sowie ein Fahrwerk, umfassend eine vordere Achse 117 mit den dazugehörigen Aufhängungen und eine hintere Achse 119 mit den dazugehörigen Aufhängungen und Räder 121, an einem lackierten Fahrzeuggrundrahmen 102 angeordnet. Zur Bildung eines ausgestatteten Fahrgestells 131 werden außerdem die folgenden Ausstattungskomponenten am Fahrgestell 101 angebracht: eine Armatur 103, Fahrzeugsitze 105, Teppichböden 107, insbesondere unterhalb der Sitze 105, ein Kühler 113 und ein Stoßfängerquerträger 115. Außerdem wird am Fahrgestell 101 ein Boden 125 für den Innenraum befestigt.

Die vorstehende Aufzählung von Bauteilen, die zur Bildung des ausgestatteten Fahrgestells 131 verwendet werden, ist nicht abschließend, sondern dient nur zur Illustration. Vielmehr können weitere Komponenten, insbesondere auch in Abhängigkeit des herzustellenden Kraftfahrzeugmodells, eingesetzt werden.

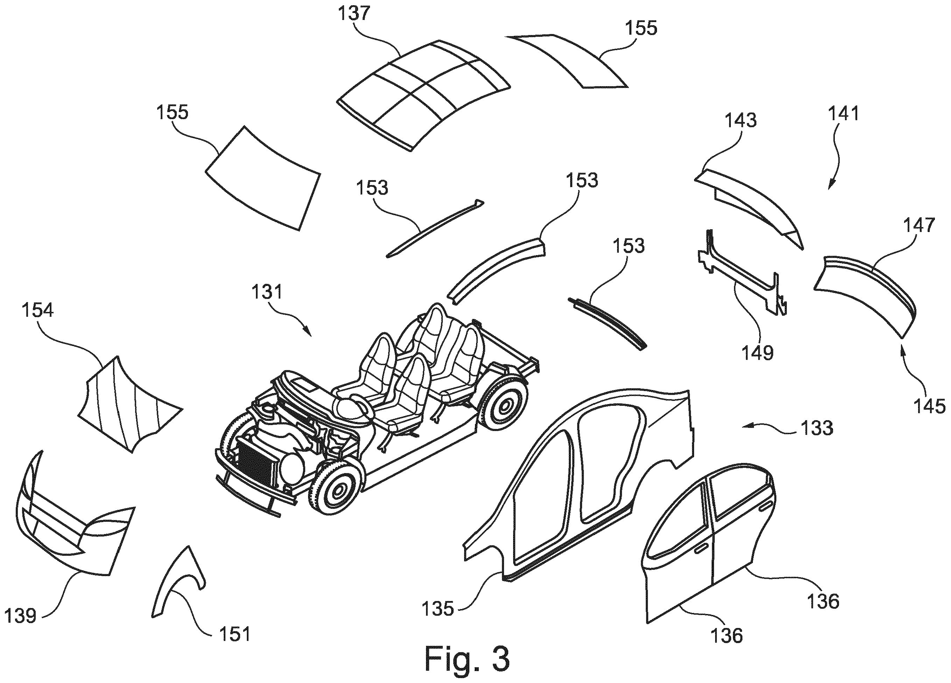

Gemäß Fig. 3 wird anhand des ausgestatteten Fahrgestells 131 das Kraftfahrzeug durch Anbringen von Aufbaumodulzusammenbauten hergestellt. Dabei wird ein linker Seitenwandmodulzusammenbau 133 umfassend einen linken Seitenwandrohbaumodul 135 sowie daran angeordnete Verkleidungen und Vorverkabelungen (nicht gezeigt) auf der linken Seite am ausgestatteten Fahrgestell 131 angeordnet. In entsprechender Weise wird ein rechter, nicht gezeigter Seitenwandmodulzusammenbau auf der rechten Seite des Fahrgestells 131 angeordnet. Am linken Seitenwandmodulzusammenbau 133 werden Türmodulzusammenbauten 136 angeordnet, die jeweils ein Türrohbaumodul mit daran angeordneten Verkleidungselementen und Elektrikeinrichtungen umfassen. Entsprechende Türmodulzusammenbauten (nicht gezeigt) werden auch am rechten Seitenwandmodulzusammenbau angeordnet, nachdem dieser am ausgestatteten Fahrgestell befestigt wurde.

Außerdem wird ein Dachmodulzusammenbau 137, eine Frontschürze 139, ein Heckklappenmodulzusammenbau 141 mit einer Heckklappe 143 und daran angeordneter Verkleidungen sowie ein Heckabschlussmodulzusammenbau 145 mit einem Heckabschlussrohbaumodul-149 und daran angeordneter Ladekante angebracht. Zudem werden weitere Karosserieverkleidungen, wie etwa ein seitliches Karosserieelement 151 für den linken vorderen Radkasten, sowie Blenden 153 im Bereich zwischen benachbarten Aufbaumodulzusammenbauten, eine Motorhaube 154, Scheiben 155 und eine Heckschürze 147 angebracht.

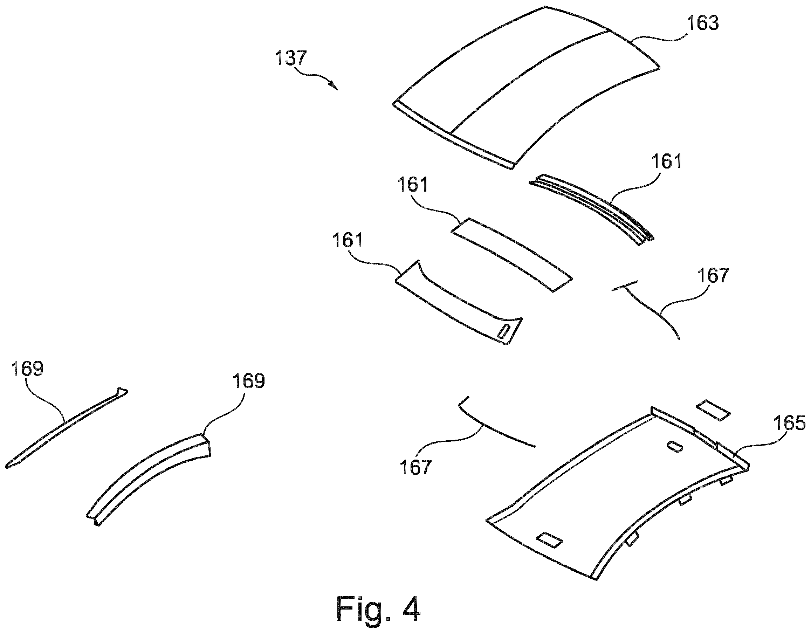

Gemäß Fig. 4 werden zur Erzeugung des Dachmodulzusammenbaus 137 Elemente 161 aus Stahl oder Aluminium eines Dachrahmens an einer Dachhaut 163 befestigt, wobei die Dachhaut 163 aus Stahl, Aluminium oder Kunststoff bestehen kann. Außerdem werden ein Dachhimmel 165 und Kabelstränge 167 für die Innenbeleuchtung unterhalb der Dachrahmenelemente 161 angeordnet. Darüber hinaus werden weitere Montageteile bereitgestellt, wie insbesondere die in Fig. 4 dargestellten Blenden 169. Diese werden - wie vorstehend in Bezug auf die Fig. 3 ausgeführt wurde - nach der Montage des aus den Komponenten 161 bis 167 gebildeten Dachmodulzusammenbaus 137 am Fahrzeug angebracht.

## Patentansprüche

1. Verfahren zur Herstellung eines Kraftfahrzeugs umfassend die Schritte:
- Lackieren, insbesondere kathodisches Tauchlackieren, eines Fahrzeuggrundrahmens (102);
- Erzeugen eines Fahrgestells (101) durch Anbringen eines Antriebsstrangs (109), eines Fahrwerks (117, 119) und einer Fahrzeugelektrikeinrichtung an dem lackierten Fahrzeuggrundrahmen (102);
- Anbringen von Ausstattungskomponenten (103 - 105, 125), insbesondere für den Fahrzeuginnenraum, an dem Fahrgestell, um ein ausgestattetes Fahrgestell (131) zu bilden;
- Lackieren, insbesondere Decklackieren, von bereitgestellten Aufbaurohbaumodulen (135, 143, 149)
- Erzeugen eines jeweiligen Aufbaumodulzusammenbaus (133, 137, 141, 145) aus jedem Aufbaurohbaumodul (135, 143, 149, 163) durch Anbringen einer zum jeweiligen Aufbaurohbaumodul (135, 143, 149, 163) gehörenden Modulelektrikeinrichtung (167) und/oder zumindest einer Modulausstattungskomponente (165); und
- Anbringen, insbesondere Ankleben und/oder Anschrauben, der Aufbaumodulzusammenbauten (133, 137, 141, 145) an dem ausgestatteten Fahrgestell (131),
**dadurch gekennzeichnet, dass**
die Unterseite des Fahrzeuggrundrahmens (102) bei der Montage des Antriebsstrangs (109) und des Fahrwerks (117, 119) nach oben weist, und dass das Fahrgestell (131) vor dem Anbringen der Ausstattungskomponenten (103 - 105, 125) gewendet wird, so dass die Unterseite des Fahrzeuggrundrahmens nach unten weist.

2. Verfahren nach Anspruch 1,
**dadurch gekennzeichnet, dass**
der Fahrzeuggrundrahmen (102) variabel ausgestaltet ist und dass der Fahrzeuggrundrahmen (102) auf den anzubringenden Antriebsstrang (109) und/oder das anzubringende Fahrwerk (117, 119) eingestellt wird.

3. Verfahren nach Anspruch 1 oder 2,
**dadurch gekennzeichnet, dass**
die Unterseite des Fahrzeuggrundrahmens (102) bei der Montage der Fahrzeugelektrikeinrichtung nach oben weist, und dass das Fahrgestell (131) vor dem Anbringen der Ausstattungskomponenten (103 - 105, 125) gewendet wird, so dass die Unterseite des Fahrzeuggrundrahmens nach unten weist.

4. Verfahren nach zumindest einem der vorhergehenden Ansprüche,
**dadurch gekennzeichnet, dass**
die Aufbaurohbaumodule (135, 143, 149, 163) parallel zum Fahrzeuggrundrahmen (102) gefertigt und/oder die Rohbauumfänge in einem gemeinsamen Lackiervorgang lackiert werden.

5. Verfahren nach zumindest einem der vorhergehenden Ansprüche,
**dadurch gekennzeichnet, dass**
die Aufbaurohbaumodule ein linkes Seitenwandrohbaumodul (135), ein rechtes Seitenwandrohbaumodul, ein Dachrohbaumodul (163), ein Heckabschlussrohbaumodul (149), ein Rohbaumodul einer linken vorderen Tür, ein Rohbaumodul einer rechten vorderen Tür, optional ein Rohbaumodul einer linken hinteren Tür, optional ein Rohbaumodul einer rechten hinteren Tür, und ein Heckklappenrohbaumodul umfassen.

6. Verfahren nach Anspruch 5,
**dadurch gekennzeichnet, dass**
die Aufbaumodulzusammenbauten einen linken und rechten Seitenwandmodulzusammenbau (133), einen Dachmodulzusammenbau (137), einen Heckabschlussmodulzusammenbau (149), zumindest einen Türmodulzusammenbau (136) und einen Heckklappenmodulzusammenbau (141) umfassen.

7. Verfahren nach Anspruch 6,
**dadurch gekennzeichnet, dass**
der linke bzw. rechte Seitenwandmodulzusammenbau (133) das Rohbaumodul der linken bzw. rechten Seitenwand sowie daran angebrachte Säulenverkleidungen und/oder daran angebrachte Seitenwandelektrikkomponenten aufweist, der Dachmodulzusammenbau (137) das Dachrohbaumodul (163) mit einem daran angebrachten Dachhimmel (165) und/oder daran angebrachten Innenbeleuchtungselementen (167) aufweist, der Heckabschlussmodulzusammenbau (145) den Heckabschlussrohbaumodul (149) mit daran angeordneter Heckblende und/oder daran angeordneter Ladekante und/oder daran angeordneter Verkleidung aufweist, jeder Türmodulzusammenbau (136) jeweils ein Türrohbaumodul mit daran angeordneter Verkleidung und/oder daran angeordneten Türelektrikeinrichtungen aufweist, und der Heckklappenmodulzusammenbau (141) das Heckklappenrohbaumodul (143) mit daran angeordneter Verkleidung und/oder daran angeordneten Heckklappenelektrikeinrichtungen umfasst.

8. Verfahren nach Anspruch 7,
**dadurch gekennzeichnet, dass**
der linke und der rechte Seitenwandmodulzusammenbau (133), der Dachmodulzusammenbau (137), der Heckabschlussmodulzusammenbau (145), der Heckklappenmodulzusammenbau (141) und die Türmodulzusammenbauten (136) durch Kleben und/oder Verschrauben an dem ausgestatteten Fahrgestell (131) befestigt werden.

9. Verfahren nach Anspruch 8,
**dadurch gekennzeichnet, dass** Blenden (153, 169) zur Abdeckung von Schraub- und/oder Klebestellen zwischen benachbarten Aufbaumodulzusammenbauten angeordnet werden.

10. Verfahren nach zumindest einem der vorhergehenden Ansprüche,
**dadurch gekennzeichnet, dass**
Scheiben (155) und/oder ein Frontmodul und /oder Stoßfängerüberzüge und/oder Kotflügel nach dem Anbringen der Aufbaumodulzusammenbauten (133, 137, 141, 145) am ausgestatteten Fahrgestell (131) eingebaut werden.

11. Verfahren nach zumindest einem der vorhergehenden Ansprüche,
**dadurch gekennzeichnet, dass**
die Fahrzeugelektrikeinrichtung zumindest eine Koppelstelle für jede Modulelektrikeinrichtung aufweist, über die die jeweilige Modulelektrikeinrichtung mit der Fahrzeugelektrikeinrichtung elektrisch verbunden wird, insbesondere nach dem Anbringen der Aufbaumodulzusammenbauten am ausgestatteten Fahrgestell.

12. Verfahren nach zumindest einem der vorhergehenden Ansprüche,
**dadurch gekennzeichnet, dass**
die Aufbaumodulzusammenbauten (133, 137, 141, 145) derart an dem ausgestatteten Fahrgestell (131) angebracht und miteinander verbunden werden, dass die Steifigkeit des Fahrgestells (131) erhöht wird.

## Claims

1. Process for the assembly of a motor vehicle, comprising the following steps:
- painting, in particular cathodic dip painting, of a vehicle base frame (102);
- production of a chassis (101) by attaching a drive train (109), a running gear assembly (117, 119) and a vehicle electrical system to the painted vehicle base frame (102);
- attachment of equipment components (103 - 105, 125), particularly for the vehicle interior, to the chassis in order to form an equipped chassis (131) ;
- painting, in particular top coating, of upper body shell modules (135, 143, 149) provided;
- production of an upper body module assembly (133, 137, 141, 145) from each upper body shell module (135, 143, 149, 163) by attachment of a module electrical system (167) belonging to the respective upper body shell module (135, 143, 149, 163) and/or of at least one module equipment component (165); and
- attachment, in particular adhesive bonding and/or screwing, of the upper body module assemblies (133, 137, 141, 145) to the equipped chassis (131),
**characterized in that**
the underside of the vehicle base frame (102) faces upwards during the mounting of the drive train (109) and of the running gear assembly (117, 119), and **in that** the chassis (131) is turned before the attachment of the equipment components (103 - 105, 125), so that the underside of the vehicle base frame faces downwards.

2. Process according to Claim 1,
**characterized in that**
the vehicle base frame (102) is of variable configuration, and **in that** the vehicle base frame (102) is adjusted to the drive train (109) to be attached and/or to the running gear assembly (117, 119) to be attached.

3. Process according to Claim 1 or 2,
**characterized in that**
the underside of the vehicle base frame (102) faces upwards during the mounting of the vehicle electrical system, and **in that** the chassis (131) is turned before the attachment of the equipment components (103 - 105, 125), so that the underside of the vehicle base frame faces downwards.

4. Process according to at least one of the preceding claims,
**characterized in that**
the upper body shell modules (135, 143, 149, 163) are produced in parallel with the vehicle base frame (102) and/or the shell items are painted in a joint painting operation.

5. Process according to at least one of the preceding claims,
**characterized in that**
the upper body shell modules comprise a left-hand side wall shell module (135), a right-hand side wall shell module, a roof shell module (163), a rear end shell module (149), a shell module for a front left-hand door, a shell module for a front right-hand door,
optionally a shell module for a rear left-hand door, optionally a shell module for a rear right-hand door, and a tailgate shell module.

6. Process according to Claim 5,
**characterized in that**
the upper body module assemblies comprise a left-hand and a right-hand side wall module assembly (133), a roof module assembly (137), a rear end module assembly (149), at least one door module assembly (136) and a tailgate module assembly (141).

7. Process according to Claim 6,
**characterized in that**
the left-hand and the right-hand side wall module assemblies (133) have the shell module for the left-hand and the right-hand side walls, respectively, and pillar trim panels attached thereto and/or side wall electrical components attached thereto, the roof module assembly (137) has the roof shell module (163) with a roof liner (165) attached thereto and/or interior lighting elements (167) attached thereto, the rear end module assembly (145) has the rear end shell module (149) with a rear cover panel arranged thereon and/or a loading sill arranged thereon and/or a trim panel arranged thereon, each door module assembly (136) has a door shell module with a trim panel arranged thereon and/or door electrical systems arranged thereon, and the tailgate module assembly (141) comprises the tailgate shell module (143) with a trim panel arranged thereon and/or tailgate electrical systems arranged thereon.

8. Process according to Claim 7,
**characterized in that**
the left-hand and the right-hand side wall module assembly (133), the roof module assembly (137), the rear end module assembly (145), the tailgate module assembly (141) and the door module assemblies (136) are secured on the equipped chassis (131) by adhesive bonding and/or screw fastening.

9. Process according to Claim 8,
**characterized in that**
cover panels (153, 169) for covering screw fastening and/or adhesive bonding locations are arranged between adjacent upper body module assemblies.

10. Process according to at least one of the preceding claims,
**characterized in that**
windowpanes (155) and/or a front module and/or bumper covers and/or wheel arches are fitted on the equipped chassis (131) after the attachment of the upper body module assemblies (133, 137, 141, 145).

11. Process according to at least one of the preceding claims,
**characterized in that**
the vehicle electrical system has at least one coupling point for each module electrical system, via which the respective module electrical system is connected electrically to the vehicle electrical system, in particular after the attachment of the upper body module assemblies to the equipped chassis.

12. Process according to at least one of the preceding claims,
**characterized in that**
the upper body module assemblies (133, 137, 141, 145) are attached to the equipped chassis (131) and connected to one another in such a way that the stiffness of the chassis (131) is increased.

## Revendications

1. Procédé de fabrication d'un véhicule automobile, comprenant les étapes suivantes:
- peinture, en particulier peinture par immersion cathodique, d'un cadre de base de véhicule (102);
- production d'un châssis (101) par pose d'une chaîne cinématique (109), d'un train de roulement (117, 119) et d'un système électrique de véhicule sur le cadre de base de véhicule peint (102);
- pose de composants d'équipement (103 - 105, 125), en particulier pour l'espace intérieur du véhicule, sur le châssis, afin de former un châssis équipé (131);
- peinture, en particulier peinture de recouvrement, de modules bruts de carrosserie préparés (135, 143, 149);
- production d'un assemblage de module de carrosserie respectif (133, 137, 141, 145) à partir de chaque module brut de carrosserie (135, 143, 149, 163) par pose d'un système électrique de module (167) faisant partie du module brut de carrosserie respectif (135, 143, 149, 163) et/ou d'au moins un composant d'équipement de module (165); et
- pose, en particulier collage et/ou vissage, des assemblages de module de carrosserie (133, 137, 141, 145) sur le châssis équipé (131),
**caractérisé en ce que** le côté inférieur du cadre de base de véhicule (102) est tourné vers le haut lors du montage de la chaîne cinématique (109) et du train de roulement (117, 119), et **en ce que** l'on retourne le châssis (131) avant la pose des composants d'équipement (103 - 105, 125), de telle manière que le côté inférieur du cadre de base de véhicule soit tourné vers le bas.

2. Procédé selon la revendication 1, **caractérisé en ce que** le cadre de base de véhicule (102) est configuré de façon variable et **en ce que** l'on règle le cadre de base de véhicule (102) suivant la chaîne cinématique à poser (109) et/ou le train de roulement à poser (117, 119).

3. Procédé selon la revendication 1 ou 2, **caractérisé en ce que** le côté inférieur du cadre de base de véhicule (102) est tourné vers le haut lors du montage du système électrique de véhicule, et **en ce que** l'on retourne le châssis (131) avant la pose des composants d'équipement (103 - 105, 125), de telle manière que le côté inférieur du cadre de base de véhicule soit tourné vers le bas.

4. Procédé selon au moins une des revendications précédentes, **caractérisé en ce que** l'on fabrique les modules bruts de carrosserie (135, 143, 149, 163) en parallèle avec le cadre de base de véhicule (102) et/ou on peint les périmètres de structure brute dans une opération de peinture commune.

5. Procédé selon au moins une des revendications précédentes, **caractérisé en ce que** les modules bruts de carrosserie comprennent un module brut de paroi latérale gauche (135), un module brut de paroi latérale droite, un module brut de toit (163), un module brut de fermeture arrière (149), un module brut d'une porte avant gauche, un module brut d'une porte avant droite, en option un module brut d'une porte arrière gauche, en option un module brut d'une porte arrière droite, et un module brut de hayon arrière.

6. Procédé selon la revendication 5, **caractérisé en ce que** les assemblages de module de carrosserie comprennent un assemblage de module de paroi latérale gauche et droite (133), un assemblage de module de toit (137), un assemblage de module de fermeture arrière (149), au moins un assemblage de module de porte (136) et un assemblage de module de hayon arrière (141).

7. Procédé selon la revendication 6, **caractérisé en ce que** l'assemblage de module de paroi latérale gauche ou droite (133) présente le module brut de la paroi latérale gauche ou droite ainsi que des habillages de colonne posés sur celui-ci et/ou des composants électriques de paroi latérale posés sur celui-ci, l'assemblage de module de toit (137) présente le module brut de toit (163) avec un ciel de toit (165) posé sur celui-ci et/ou des éléments d'éclairage intérieur (167) installés sur celui-ci, l'assemblage de module de fermeture arrière (145) présente le module brut de fermeture arrière (149) avec un écran arrière disposé sur celui-ci et/ou un bord de chargement disposé sur celui-ci et/ou un habillage disposé sur celui-ci, chaque assemblage de module de porte (136) présente respectivement un module brut de porte avec un habillage disposé sur celui-ci et/ou des systèmes électriques de porte installés sur celui-ci, et l'assemblage de module de hayon arrière (141) présente le module brut de hayon arrière (143) avec un habillage disposé sur celui-ci et/ou des systèmes électriques de hayon arrière disposés sur celui-ci.

8. Procédé selon la revendication 7, **caractérisé en ce que** l'assemblage de module de paroi latérale gauche ou droite (133), l'assemblage de module de toit (137), l'assemblage de module de fermeture arrière (145), l'assemblage de module de hayon arrière (141) et les assemblages de module de porte (136) sont fixés par collage et/ou vissage au châssis équipé (131).

9. Procédé selon la revendication 8, **caractérisé en ce que** des écrans (153, 169) sont disposés entre des assemblages de module de carrosserie voisins pour recouvrir les points de vissage et/ou de collage.

10. Procédé selon au moins une des revendications précédentes, **caractérisé en ce que** l'on installe des vitres (155) et/ou un module frontal et/ou des gainages de pare-chocs et/ou des passages de roue après la pose des assemblages de module de carrosserie (133, 137, 141, 145) sur le châssis équipé (131).

11. Procédé selon au moins une des revendications précédentes, **caractérisé en ce que** le système électrique de véhicule présente au moins un point de couplage pour chaque système électrique de module, par lequel le système électrique de module respectif est raccordé électriquement au système électrique de véhicule, en particulier après la pose des assemblages de module de carrosserie sur le châssis équipé.

12. Procédé selon au moins une des revendications précédentes, **caractérisé en ce que** l'on pose les assemblages de module de carrosserie (133, 137, 141, 145) sur le châssis équipé (131) et on les assemble les uns aux autres, de telle manière que la rigidité du châssis (131) soit accrue.
